# EUROPEAN PATENT APPLICATION

(11) **EP 1 355 229 A2**
(43) Date of publication of application: **22.10.2003**
(21) Application number: 03008583.1
(22) Date of filing: 14.04.2003
(51) Int. Cl.: G06F 3/06

(54) **Method and device for data storage using wireless communication**

(30) Priority: 15.04.2002 JP 2002112283
(71) Applicant: Kabushiki Kaisha Toshiba, Tokyo (JP)
(72) Inventor: Mizuhiki, Shunichi, Kabushiki Kaisha Toshiba, Tokyo 105-8001 (JP); Kobayashi, Koichi, Kabushiki Kaisha Toshiba, Tokyo 105-8001 (JP)
(74) Representative: Henkel, Feiler, Hänzel

(57) **Abstract**

A data storage device which stores in a storage unit (10) data received by wireless data communication is disclosed. A CPU (11) included in the device decides whether the incoming signal strength received by an antenna (12) is good or bad on the basis of RSSI information from an antenna module (13) during a data writing operation to the storage unit (10). When the incoming signal strength deteriorate, the CPU (11) aborts the data writing operation to the storage unit (10).

## Description

The present invention generally relates to an information technology device which has a function of wireless data communication, particularly to a portable type of data storage device which stores data received by a radio wave in a storage medium.

In recent years, particularly by utilizing local wireless data communication, a technique for performing data transmission between, e.g., personal computers or a personal computer and peripherals has been realized. A portable type of data storage device having a wireless data communication unit has been proposed as one of the development modes of such a technique.

The data storage device is a dedicated terminal which has, e.g., a disk drive such as a hard disk drive (HDD), a magneto-optical disk drive or a flash memory as a built-in storage medium, and records the data, which is demodulated from the radio wave received by the wireless data communication unit, in the storage medium.

A source of the data is an information technology device such as a digital camera. The digital camera has the wireless data communication unit, and transmits the image data which is photographed to the portable type of data storage device with the radio wave.

The portable type of data storage device retains a large quantity of image data by using the mass storage medium such as the disk drive. Since the portable type of data storage device can perform data transmission between the data storage device and the digital camera with the wireless communication, unlike a mode connected by a cable, operational limitations of the digital camera can be greatly relaxed. Concretely, while the data storage device is put at a remote position, the image data that is photographed by the digital camera can be retained in real time in the storage medium of the data storage device.

As described above, the portable type of data storage device having the function of the wireless data communication is very useful. However, when the radio wave in transmission is disconnected, data writing operation to the storage medium is aborted. Particularly, in the local wireless communication unit, since the effective distance between the local wireless communication unit and the information technology device of the source is short, sometimes the propagation state of the radio wave, i.e., receiving state of the data deteriorate.

When such a state occurs during writing operation, the data writing operation to the storage medium is forcefully aborted. Accordingly, the state of the data recording becomes unstable such that part of the data which is being written is lost, only part of the data to be recorded exists in the storage medium, or the like.

In the field of wireless communication devices such as cellular phones of the prior art, there has been proposed a technique of the prior art, in which the state of the radio wave (or the state of the wireless communication) is monitored and information indicating the state of the radio wave is output or predetermined control operation is executed when the state of the radio wave is bad (for example, see Jpn. Pat. Appln. KOKAI Publication No. 10-164251 or 11-27729).

However, only the monitoring of the state of the radio wave not can previously prevent the situation in which part of the data that is being written is lost or only part of the data is recorded in the storage medium.

In accordance with one embodiment of the present invention, there is provided a data storage device including a wireless communication unit, the device decides the receiving state of a received radio wave on the basis of RSSI (Received Signal Strength Indication) information, and controls data writing operation into a storage medium when the receiving state deteriorate to such an extent that the receiving state is impermissible.

The data storage device comprises an antenna for wireless data communication; a receiving unit which demodulates data from a radio wave received through the antenna for wireless data communication and detects a received signal strength indication (RSSI) of the radio wave to generate RSSI information; a storage unit to store the data received by the receiving unit; and a controller which decides the receiving state of the radio wave on the basis of the RSSI information during the data writing operation to the storage unit and controls the storage unit so as to abort data writing operation to the storage unit when the receiving state is impermissible.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a main part of a data storage device according to an embodiment of the invention;
FIG. 2 is a block diagram for illustrating operation of data writing control according to the embodiment; and
FIG. 3 is a flow chart for illustrating the operation of data writing control.

A preferred embodiment of the invention will be described below referring to the accompanying drawings.

### (Configuration of data storage device)

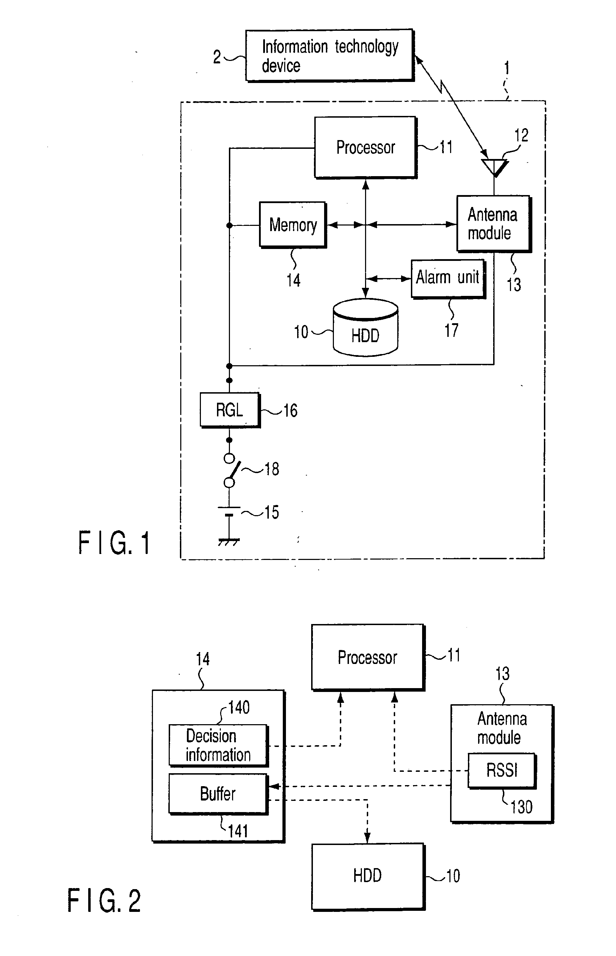

FIG. 1 is a block diagram showing a main part of a data storage device, for example a portable type, having the function of the wireless data communication according to an embodiment.

The device 1 includes a disk drive 10 of the storage unit, a microprocessor (CPU) 11, an antenna 12, an antenna module 13, a memory 14, a battery 15, and a regulator circuit 16.

The disk drive 10 is assumed to be a hard disk drive (HDD) utilizing a disk storage medium. The CPU 11 operates with a program stored in the memory 14 and executes control of the entire device. As described later, the memory 14 includes a buffer area (see 141 in FIG. 2) storing temporarily the data that is to be written to the HDD 10 besides the program. The memory is formed of, e.g., a flash EEPROM.

The antenna module 13 is a circuit that controls transmission and reception of the data through the antenna 12 and realizes wireless data communication between the device 1 and an information technology device 2 of an opposite party. As shown in FIG. 2, the antenna module 13 includes an RSSI unit 130 for monitoring the state of the radio wave (the receiving state of the data), which is received by the antenna 12. The RSSI unit 130 detects the received signal strength of the radio wave received by the antenna 12 and generates the RSSI information that is a result of the detection.

The battery 15 and the regulator circuit 16 are a power supply for supplying electric power operating the entire device. A power switch 18 controls power-on and power-off from the power supply.

Further, the device 1 has an alarm unit 17 controlled by the CPU 11. The alarm unit 17 generates a warning sound for a user when the data writing operation to the HDD 10 is aborted.

### (Operation of data writing control)

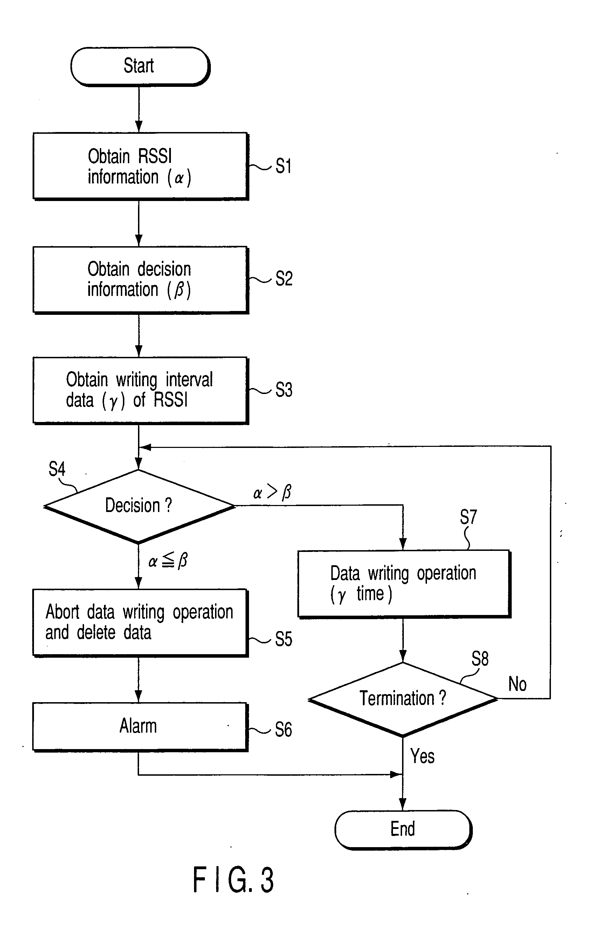

Referring to FIGS. 2 and 3 besides FIG. 1, operation of data writing control of the embodiment will be described below.

The device 1 receives a radio wave (for example, a radio wave in which the image data is modulated) which is transmitted from the information technology device 2, e.g., a digital camera having the function of wireless data communication with the antenna 12 and stores it in the HDD 10.

The antenna module 13 demodulates the radio wave received by the antenna 12 to data, and transmits the data to the buffer area 141 in the memory 14 (See FIG. 2). The CPU 11 reads in order the data stored in the buffer area 141 to transmit it to the HDD 10. The HDD 10 writes the transmitted data to the disk recording medium by the control of an internal CPU.

The CPU 11 reads RSSI information (α) from the RSSI unit 130 in the antenna module 13 at predetermined timing in the data writing operation (step S1). Then, the CPU 11 reads decision information (β) for deciding whether the state of the received radio wave from the memory 14 is permissible or not (step S2). The decision information (β) is the information which corresponds to reference RSSI information showing a limit value of permissibility of the radio wave state, and the decision information (β) is previously stored in a predetermined storage area 140 of the memory 14. The CPU 11 reads writing interval data (γ) that corresponds to a sampling interval of the RSSI information from the memory 14 (step S3). That is, the CPU 11 decides whether the radio wave state is good or bad on the basis of the RSSI information at the time interval shown by the writing interval data (γ) (step S4).

The CPU 11 compares the obtained RSSI information (α) with the obtained decision information (β), and when the received signal strength of the radio wave is larger than the reference value (α > β), the CPU 11 causes the data writing operation to the HDD 10 to be executed (step S7). That is, the CPU 11 transmits the received data (the individual image data) which is buffered in the memory 14 to the HDD 10.

The CPU 11 continues the data writing operation for the time shown by the writing interval data (γ) and decides whether the transmission of the data which should be written is terminated or not (step S8). When the transmission of the entire data sent from the information technology device 2 is terminated, the CPU 11 ends the data writing operation to the HDD 10 (YES in step S8).

When the writing operation is not terminated within the predetermined time (γ), the CPU 11 executes the decision of the permissibility of the radio wave state (NO in step S8). The CPU 11 obtains the new RSSI information (α) from the antenna module 13, and decides whether the state of the receiving radio wave is permissible or not on the basis of the decision information (β). That is, the CPU 11 reads and updates the RSSI information (α) from the antenna module 13 at the predetermined time interval (γ).

If the received signal strength of the radio wave is not more than the reference value (α ≦ β) by the result of the comparison between the obtained RSSI information (α) and the obtained decision information (β), the CPU 11 aborts the data writing operation to the HDD 10 (step S5). Specifically, the CPU 11 halts the data transmission from the memory 14 to the HDD 10. Accordingly, at this time, the antenna module 13 demodulates the radio wave received by the antenna 12 to data, and transmits the data to the memory 14.

Further, while the CPU 11 aborts the data writing operation, the CPU 11 causes the data, which is written to the HDD 10 by the data writing operation which has been already executed, to be erased. Accordingly, at the time when the radio wave state being sent from the information technology device 2 becomes faulty, while the HDD 10 aborts the data writing operation, the HDD 10 deletes the data which had been written before the data writing operation was aborted from the disk recording medium. Then, the CPU 11 controls the alarm unit 17 to cause the alarm unit 17 to output a warning sound for providing a notification that the data writing operation to the HDD 10 has been aborted (step S6).

As described above, according to the embodiment, when the data sent from the external information technology device 2 by the radio wave is written to be recorded on the disk recording medium of the HDD 10, the permissibility of the radio wave state is monitored on the basis of the RSSI information. When the radio wave state deteriorate, the device 1 aborts the data writing operation to the HDD 10 and provides notice to the user.

Consequently, when the radio wave state deteriorate at the time when the data writing operation is initiated, since the data writing operation to the HDD 10 can be aborted before the initiation of the data writing operation, a situation such as loss of data can be prevented from occurring. The user can perform various actions, since the user can recognize that the radio wave state deteriorate to abort the data writing operation to the HDD 10 by the alarm.

When the radio wave state deteriorate during the data writing operation, while the data writing operation is aborted, part of the data that has been already written to the HDD 10 is erased. Accordingly, since the unnecessary data can be deleted from the HDD 10, wasteful use of the recording area can be prevented.

With reference to a concrete example, a case in which one block of image data sent from, e.g., the digital camera (information technology device 2) is received with the radio wave and the radio wave state deteriorate during storing of the data in the HDD 10 is assumed. In such a case, when the radio wave state deteriorate and the data writing operation is aborted, there is a possibility that part of one block of the image data has been already recorded in the HDD 10. According to the embodiment, since the part of the image data is deleted from the HDD 10, the situation in which dead data is stored in the HDD 10 can be prevented from occurring.

By the alarm for the user, the user who operates, e.g., the digital camera (information technology device 2) can recognize that the user has moved from a position of the device 1 to a location where the radio wave not can be sufficiently propagated. Therefore, considering the distance between the digital camera (information technology device 2) and the device 1, the user can send the image data again from the digital camera to the device 1. At this point, since the user can confirm that the entire one block of the image data sent from, e.g., the digital camera is not recorded in the device 1 by the alarm, by executing the sending again, the situation in which the image data is lost can be prevented from occurring.

In the embodiment, although an HDD 10 using the disk recording medium is assumed as the recording medium, the invention is not limited to the assumption, and a magneto-optical disk drive using a magneto-optical disk or a flash memory using a flash EEPROM may be applicable. Also, although the unit that generates the warning sound for the user is assumed as an alarm unit 17, the invention is not limited to the assumption; for example, a unit performing a warning indication on an LCD (Liquid Crystal Display) may be applicable.

Generally it is assumed that the device 1 is applied to a portable type of external storage device such as a card-shaped one.

### (Modification)

When the radio wave state deteriorate to the extent near the limitation of the permissible value in the decision result based on the RSSI information at the time that the data writing operation is initiated, the CPU 11 may control the alarm unit 17 to generate the warning sound before the abortion of the data writing operation.

In this way, for example, when the user moves while operation the digital camera (information technology device 2), the alarm can encourage the user to halt the movement before the user is too far away from the device 1 for the radio wave to be propagated. Accordingly, the situation in which the data writing operation to the HDD 10 is aborted by the deteriorating radio wave state can be prevented from occurring.

As described above, when the receiving state of the radio wave deteriorate during the data writing operation to the storage unit, the data writing operation can be aborted. Consequently, when the receiving state of the data deteriorate, the situation in which the data is lost or the like during the writing in the recording medium can be prevented from occurring. The situation in which only the part of the data is stored in the storage medium and the remaining data is lost can be prevented from occurring. It is useful for the data storage device of the embodiment to be applied to, in particular, a portable type of data storage device.

## Claims

1. A data storage device having a wireless communication unit, **characterized by** comprising:
an antenna (12) for wireless data communication;
a receiving unit (13) which demodulates data from a radio wave received through the antenna (12) for wireless data communication and detects the received signal strength indicator of the radio wave to generate RSSI information;
a storage unit (10) to store the data received by the receiving unit (13); and
a controller (11) which decides the receiving state of the radio wave on the basis of the RSSI information during the data writing operation to the storage unit (10), and controls the storage unit (10) so as to abort data writing operation to the storage unit (10) when the receiving state is impermissible.

2. The data storage device according to claim 1, **characterized in that** the receiving unit (13) is connected to the antenna for wireless data communication (12) and included in an antenna module which controls transmission and reception of the radio wave through the antenna.

3. The data storage device according to claim 1, **characterized in that** the storage unit (10) includes a disk drive which uses a disk medium to record the data.

4. The data storage device according to claim 1, **characterized in that** the storage unit (10) includes a flash memory.

5. The data storage device according to claim 1, **characterized by** further comprising;
a buffer memory to temporarily buffer the data received by the receiving unit (13) and to transmit the data to the storage unit (10).

6. The data storage device according to claim 1, **characterized in that** the controller (11) deletes the data written into the storage unit (10) while the controller (11) aborts the data writing operation to the storage unit (10) when the receiving state of the radio wave is impermissible.

7. The data storage device according to claim 1, **characterized in that** the controller (11) obtains the RSSI information from the receiving unit (13) at a predetermined time interval to decide the receiving state, and the controller (11) causes the data writing operation to be executed within the time interval when the receiving state is normal.

8. The data storage device according to claim 7, **characterized in that** the controller (11) repeats from the decision operation of the receiving state when the data writing operation is not terminated within the time interval.

9. The data storage device according to claim 1, **characterized by** further comprising;
a memory (140) which stores reference RSSI information showing a limit value of permissibility,
wherein the controller (11) compares the reference RSSI information read from the memory (140) with the RSSI information obtained from the receiving unit (13), and the controller (11) decides that the receiving state is impermissible when the value of the RSSI, which is detected by the receiving unit (13), is not a limit value of the permissibility.

10. The data storage device according to claim 1, **characterized by** further comprising;
a unit (17) which notifies that the data writing operation not can be performed when the receiving state is impermissible, and the controller (11) operates the unit (17) when the receiving state is impermissible.

11. A method of write control for a data storage device (1) having a wireless communication unit (12 and 13) and a storage unit (10), the method **characterized by** comprising:
receiving data sent by a radio wave through an antenna for wireless data communication (12) and a receiving unit (13);
detecting the received signal strength indication (RSSI) of the radio wave to generate RSSI information (S1);
deciding the receiving state of the radio wave on the basis of the RSSI information (S4);
executing writing operation of writing the received data to the storage unit (10) when the receiving state of the radio wave is normal (37); and
aborting data writing operation to the storage unit (10) when the receiving state of the radio wave shows that the receiving state is impermissible (S5).

12. The method according to claim 11, **characterized by** further comprising;
temporarily buffering the received data in a memory (14); and
transmitting the data from the memory (14) to the storage unit (10) during the data writing operation.

13. The method according to claim 11, **characterized by** further comprising;
deleting the data which written into the storage unit (10) when the receiving state of the radio wave shows that the receiving state is impermissible (S5).

14. The method according to claim 11, **characterized by** further comprising;
obtaining the RSSI information within a predetermined time interval (S1); and
executing the data writing operation to the storage unit (10) within the time interval when the result in which the receiving state of the radio wave has been decided on the basis of the RSSI information is the normal receiving state (S4 and S7).

15. The method according to claim 11, **characterized by** further comprising;
repeating from decision operation of the receiving state when the writing operation is not terminated within the time interval (S8).

16. The method according to claim 11, **characterized by** further comprising a memory (140) which stores reference RSSI information which shows a limit value of permissibility, wherein
comparing the reference RSSI information read from the memory (140) to the RSSI information obtained from the receiving unit (13), and deciding that the receiving state is impermissible when a value of the RSSI, which is detected by the receiving unit (13), is not a limit value of the permissibility (S1, S2, and S4).

17. The method according to claim 11, **characterized by** further comprising;
notifying that by an alarm unit (17), the data writing operation not can be performed when the decision result of the decision operation is the impermissible receiving state (S6).
